# EUROPEAN PATENT APPLICATION

(11) **EP 4 832 439 A1**
(43) Date of publication of application: **28.10.2026**
(21) Application number: 24919862.3
(22) Date of filing: 13.11.2024
(51) Int. Cl.: H04L 41/14

(54) **CLOSED-LOOP CONTROL METHOD AND APPARATUS**

(30) Priority: 27.01.2024 CN 202410117872
(71) Applicant: Huawei Technologies Co., Ltd., Shenzhen, Guangdong 518129 (CN)
(72) Inventor: LI, Shitao, Shenzhen, Guangdong 518129 (CN)
(74) Representative: Huawei European IPR
(86) International application number: PCT/CN2024/131791
(87) International publication number: WO 2025/156782

(57) **Abstract**

A closed-loop control method, and an apparatus are disclosed. The method includes: receiving a first request, where the first request includes a first closed-loop work object, and the first request is used to request to create an instance of the first closed-loop work object; creating an instance of a first analysis work object based on the first closed-loop work object, where the first analysis work object is used to initiate a second request to a management data analytics function MDAF; updating the instance of the first analysis work object based on a first analysis report corresponding to the second request; creating an instance of a first execution work object based on the instance of the first analysis work object; and replying with a first response, where the first response includes instance information of the first closed-loop work object. Through the method and the apparatus, closed-loop control can be implemented in a wireless communication system.

## Description

### CROSS-REFERENCE TO RELATED APPLICATIONS

This application claims priority to Chinese Patent Application No. 202410117872.X, filed with the China National Intellectual Property Administration on January 27, 2024 and entitled "CLOSED-LOOP CONTROL METHOD, AND APPARATUS", which is incorporated herein by reference in its entirety.

### TECHNICAL FIELD

This application relates to the field of communication technologies, and in particular, to a closed-loop control method, and an apparatus.

### BACKGROUND

Closed-loop control is a method for managing networks and services. The entire closed-loop control process is fully automated without participation of human operators or any other management entities. How to implement closed-loop control in a wireless communication system is a research direction.

### SUMMARY

Embodiments of this application provide a closed-loop control method, and an apparatus, to implement closed-loop control in a wireless communication system.

According to a first aspect, a closed-loop control method is provided. The method is applied to a closed control loop CCL management function, and includes: receiving a first request, where the first request includes a first closed-loop work object, and the first request is used to request to create an instance of the first closed-loop work object; creating an instance of a first analysis work object based on the first closed-loop work object, where the first analysis work object is used to initiate a second request to a management data analytics function MDAF; updating the instance of the first analysis work object based on a first analysis report corresponding to the second request; creating an instance of a first execution work object based on the instance of the first analysis work object; and replying with a first response, where the first response includes instance information of the first closed-loop work object.

In a design, the method further includes: sending the second request to the MDAF, where the second request is used to request the MDAF to analyze content included in the second request; and receiving a second response from the MDAF, where the second response includes the first analysis report, and the first analysis report includes indication information of a corresponding first model.

In a design, the first analysis report further includes indication information of network impact.

In a design, the first execution work object includes one or more execution tasks, and the method further includes: sending a third request to an execution function, where the third request includes the one or more execution tasks, and the third request is used to request to create the instance of the first execution work object; and receiving a third response from the execution function, where the third response includes a first execution result.

In a design, the method further includes: creating an instance of a first monitoring work object based on the first closed-loop work object.

In a design, the first monitoring work object includes one or more monitoring tasks, and the method further includes: sending a fourth request to a monitoring function, where the fourth request includes the one or more monitoring tasks, and the fourth request is used to request to create the instance of the first monitoring work object; and receiving a fourth response from the monitoring function, where the fourth response includes a first monitoring result.

In a design, the creating the instance of the first execution work object based on the instance of the first analysis work object includes: obtaining an accuracy of an analysis report of the MDAF; and creating the instance of the first execution work object based on the instance of the first analysis work object when the accuracy of the analysis report of the MDAF is greater than a threshold.

In a design, the method further includes: sending a fifth request to the MDAF, where the fifth request is used to request to create an instance of a first execution result object, the first execution result object includes one or more execution results, and the fifth request includes the one or more execution results.

In a design, the instance of the first closed-loop work object is associated with at least one of the following: the first analysis work object, the first analysis report corresponding to the first analysis work object, the instance of the first analysis work object, the first execution work object, the first execution result corresponding to the first execution work object, the instance of the first execution work object, the first monitoring work object, the first monitoring result corresponding to the first monitoring work object, or the instance of the first monitoring work object.

In a design, the receiving the first request includes: receiving a first request from an intent handler; and the replying with the first response includes: replying with the first response to the intent handler.

According to a second aspect, a closed-loop management method is provided. The method is applied to a closed control loop CCL management function, and includes: receiving a first request, where the first request includes a first closed-loop work object, and the first request is used to request to create an instance of the first closed-loop work object; creating an instance of a first analysis work object based on the first closed-loop work object, where the first analysis work object is used to initiate a second request to a management data analytics function MDAF; sending the second request to the MDAF when an accuracy of an analysis report of the MDAF is greater than a threshold, where the second request is used to request the MDAF to analyze content included in the second request, the second request includes a first indication, and the first indication indicates the MDAF to create an instance of a first execution work object; and receiving a second response from the MDAF, where the second response includes a first analysis report corresponding to the second request and a first execution result corresponding to the first execution work object.

In a design, the first indication further indicates the MDAF to create an instance of a first monitoring work object.

In a design, the second response further includes a first monitoring result corresponding to the first monitoring work object.

In a design, the first analysis report includes indication information of a corresponding first model.

In a design, the first analysis report further includes indication information of network impact.

In a design, the second response further includes the first execution work object and/or the first monitoring work object.

According to a third aspect, a closed-loop control method is provided. The method is applied to a management data analytics function MDAF, and includes: receiving a second request from a closed control loop CCL management function, where the second request is used to request to analyze content included in the second request; determining a first analysis report based on the second request and a first model; and sending a second response to the CCL management function, where the second response includes the first analysis report, and the first analysis report includes indication information of the first model.

In a design, the first analysis report further includes indication information of network impact.

In a design, the second request includes a first indication, and the first indication indicates the MDAF to create an instance of a first execution work object.

In a design, the method further includes: creating an instance of a first analysis work object based on the first analysis report; and creating the instance of the first execution work object based on the instance of the first analysis work object.

In a design, the first execution work object includes one or more execution tasks, and the method further includes: sending a third request to an execution function, where the third request includes the one or more execution tasks, and the third request is used to request to create the instance of the first execution work object; and receiving a third response from the execution function, where the third response includes a first execution result.

In a design, the first indication further indicates the MDAF to create an instance of a first monitoring work object.

In a design, the method further includes: creating the instance of the first monitoring work object based on the instance of the first analysis work object.

In a design, the first monitoring work object includes one or more monitoring tasks, and the method further includes: sending a fourth request to a monitoring function, where the fourth request includes the one or more monitoring tasks, and the fourth request is used to request to create the instance of the first monitoring work object; and receiving a fourth response from the monitoring function, where the fourth response includes a first monitoring result.

In a design, the second response further includes at least one of the following: the first execution work object, the first execution result, the first monitoring work object, or the first monitoring result.

In a design, the method further includes: receiving a fifth request from the CCL management function, where the fifth request is used to request to create an instance of a first execution result object, the first execution result object includes one or more execution results, and the fifth request includes the one or more execution results; and determining, based on the one or more execution results, whether to retrain the first model.

According to a fourth aspect, an apparatus is provided. The apparatus can implement the foregoing method in the first aspect. For example, the apparatus includes a corresponding means (means) for implementing the foregoing first aspect. The apparatus may be implemented by hardware, implemented by software, or implemented by hardware executing corresponding software.

In a possible design, the apparatus includes a unit for implementing the foregoing first aspect.

In a possible design, the apparatus includes a processor, and the processor is configured to perform the foregoing method in the first aspect.

In a possible design, the apparatus includes a processing circuit and an interface circuit. The interface circuit is configured to receive a signal from another apparatus other than the apparatus and transmit the signal to the processing circuit, or send a signal from the processing circuit to another apparatus other than the apparatus. The processing circuit is configured to implement the foregoing method in the first aspect by using a logic circuit or executing code instructions. Optionally, the processing circuit may be a processor, and the interface circuit may be a transceiver or an input/output interface.

In a possible design, the apparatus includes a processor and a memory. The processor is configured to execute a computer program or instructions stored in the memory. The memory is configured to store the computer program or the instructions. The computer program or the instructions, when run, cause the method in the first aspect to be performed.

Optionally, the apparatus may be a first apparatus, or may be a module or unit (for example, a chip, or a chip system, or a circuit) that is in the first apparatus and that is in a one-to-one correspondence with the method/an operation/a step/an action described in the first aspect, or may be used in a matching manner with the first apparatus.

According to a fifth aspect, an apparatus is provided. The apparatus can implement the foregoing method in the second aspect. For example, the apparatus includes a corresponding means (means) for implementing the foregoing second aspect. The apparatus may be implemented by hardware, implemented by software, or implemented by hardware executing corresponding software.

In a possible design, the apparatus includes a unit for implementing the foregoing second aspect.

In a possible design, the apparatus includes a processor, and the processor is configured to perform the foregoing method in the second aspect.

In a possible design, the apparatus includes a processing circuit and an interface circuit. The interface circuit is configured to receive a signal from another apparatus other than the apparatus and transmit the signal to the processing circuit, or send a signal from the processing circuit to another apparatus other than the apparatus. The processing circuit is configured to implement the foregoing method in the second aspect by using a logic circuit or executing code instructions.

In a possible design, the apparatus includes a processor and a memory. The processor is configured to execute a computer program or instructions stored in the memory. The memory is configured to store the computer program or the instructions. The computer program or the instructions, when run, cause the method in the second aspect to be performed.

Optionally, the apparatus may be a second apparatus, or may be a module or unit (for example, a chip, or a chip system, or a circuit) that is in the second apparatus and that is in a one-to-one correspondence with the method/an operation/a step/an action described in the second aspect, or may be used in a matching manner with the second apparatus.

According to a sixth aspect, an apparatus is provided. The apparatus can implement the foregoing method in the third aspect. For example, the apparatus includes a corresponding means (means) for implementing the foregoing third aspect. The apparatus may be implemented by hardware, implemented by software, or implemented by hardware executing corresponding software.

In a possible design, the apparatus includes a unit for implementing the foregoing third aspect.

In a possible design, the apparatus includes a processor, and the processor is configured to perform the foregoing method in the third aspect.

In a possible design, the apparatus includes a processing circuit and an interface circuit. The interface circuit is configured to receive a signal from another apparatus other than the apparatus and transmit the signal to the processing circuit, or send a signal from the processing circuit to another apparatus other than the apparatus. The processing circuit is configured to implement the foregoing method in the third aspect by using a logic circuit or executing code instructions.

In a possible design, the apparatus includes a processor and a memory. The processor is configured to execute a computer program or instructions stored in the memory. The memory is configured to store the computer program or the instructions. The computer program or the instructions, when run, cause the method in the third aspect to be performed.

Optionally, the apparatus may be a second apparatus, or may be a module or unit (for example, a chip, or a chip system, or a circuit) that is in the second apparatus and that is in a one-to-one correspondence with the method/an operation/a step/an action described in the third aspect, or may be used in a matching manner with the second apparatus.

According to a seventh aspect, a computer-readable storage medium is provided, storing a computer program or instructions. The computer program or the instructions, when run on a computer, cause the computer to implement the foregoing method in the first aspect, in the second aspect, or in the third aspect.

According to an eighth aspect, a computer program product is provided. The computer program product includes a computer program or instructions used to perform the method in the first aspect, or the computer program product includes a computer program or instructions used to perform the method in the second aspect, or the computer program product includes a computer program or instructions used to perform the method in the third aspect.

According to a ninth aspect, a chip is provided, including a processor. The processor is coupled to a memory, and is configured to execute a computer program or instructions stored in the memory, to cause the chip to implement the foregoing method in the first aspect, in the second aspect, or in the third aspect.

According to a tenth aspect, a communication system is provided, including a first communication apparatus and a second communication apparatus. The first communication apparatus is configured to implement the foregoing method in the first aspect or in the second aspect. The second communication apparatus is configured to implement the foregoing method in the third aspect.

### BRIEF DESCRIPTION OF DRAWINGS

FIG. 1 is a diagram of an architecture of a communication system according to an embodiment of this application;
FIG. 2 is a diagram of a principle of closed-loop control according to an embodiment of this application;
FIG. 3 is a schematic flowchart of closed-loop control according to an embodiment of this application;
FIG. 4 is a schematic flowchart according to an embodiment of this application;
FIG. 5 is another schematic flowchart of closed-loop control according to an embodiment of this application;
FIG. 6 is another schematic flowchart according to an embodiment of this application;
FIG. 7 is a diagram of a structure of an apparatus according to an embodiment of this application; and
FIG. 8 is a diagram of another structure of an apparatus according to an embodiment of this application.

### DESCRIPTION OF EMBODIMENTS

To make objectives, technical solutions, and advantages of this application clearer, this application is further described in detail below with reference to the accompanying drawings. Specific operation methods, function descriptions, and the like in method embodiments may also be applied to apparatus embodiments or system embodiments.

Various numbers and terms such as "first" and "second" in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

In embodiments of this application, unless otherwise specified, the number of a noun represents "a singular noun or a plural noun", that is, "one or more". "At least one" means one or more, and "a plurality of" means two or more. The term "and/or" is used to describe an association relationship between associated objects, and indicates that three relationships may exist. For example, "A and/or B" may represent the following cases: only A exists, both A and B exist, and only B exists, where A and B may be singular or plural.

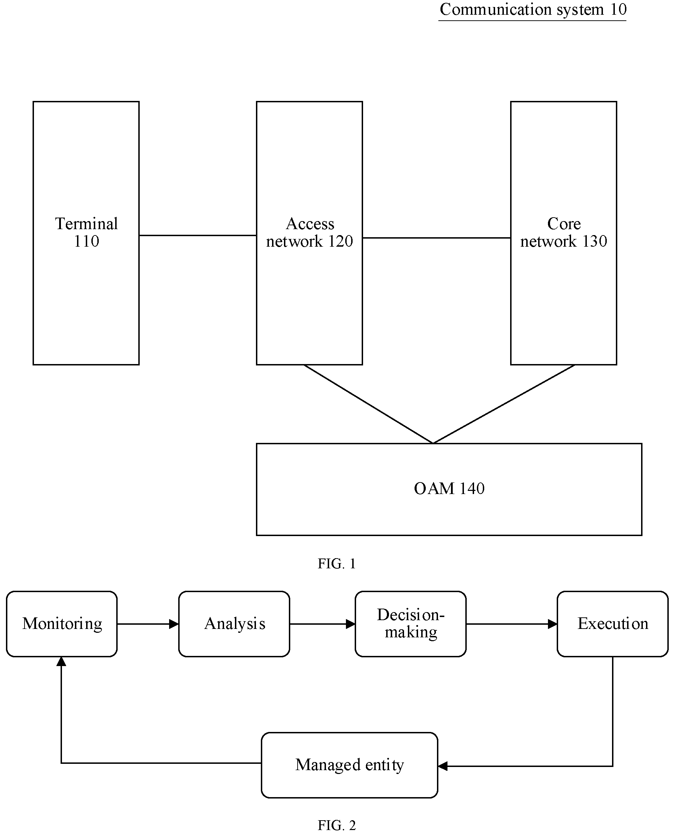

FIG. 1 is a diagram of a possible and non-limiting system. As shown in FIG. 1, a communication system 10 includes a terminal 110, an access network 120, a core network 130, and operation administration and maintenance (operation administration and maintenance, OAM) 140.

The terminal 110 may be connected to the access network 120 in a wireless manner. The access network 120 is connected to the core network 130 in a wireless or wired manner. A core network element in the core network 130 and an access network device in the access network 120 may be different physical devices, or may be a same physical device that integrates a logical function of the core network element and a logical function of a radio access network.

The terminal may also be referred to as a terminal device, user equipment (user equipment, UE), a mobile station, a mobile terminal, or the like. The terminal may be widely used in various scenarios such as device-to-device (device-to-device, D2D) communication, vehicle-to-everything (vehicle-to-everything, V2X) communication, machine-type communication (machine-type communication, MTC), an internet of things (internet of things, IoT), virtual reality (virtual reality, VR), augmented reality (augmented reality, AR), industrial control, autonomous driving, telemedicine, a smart grid, smart furniture, a smart office, a smart wearable, smart transportation, and a smart city. The terminal may be a mobile phone, a head-mounted display device, a tablet computer, a computer having a wireless transceiver function, a wearable device, a vehicle, an uncrewed aerial vehicle, a helicopter, an airplane, a ship, a robot, a robotic arm, a smart home device, or the like. A device form of the terminal is not limited in embodiments of this application.

The access network 120 includes the access network device. The access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a wireless fidelity (wireless fidelity, Wi-Fi) system, or the like. The access network device may be a macro base station, a micro base station or an indoor station, a relay node or a donor node, or a radio controller in a cloud radio access network (cloud radio access network, CRAN) scenario. Optionally, the access network device may alternatively be a server, a wearable device, a vehicle, a vehicle-mounted device, or the like. For example, the access network device in a vehicle to everything (vehicle to everything, V2X) technology may be a road side unit (road side unit, RSU).

The core network 130 includes at least one core network element. A 5th generation (5th generation, 5G) communication system is used as an example. The core network 130 includes an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.

The OAM 140 is a general term of a group of network management functions, and is configured to operate, manage, and maintain the access network device (an element management system of the access network device), and/or configured to operate, manage, and maintain the core network element (an element management system of the core network element). OAM of the access network device may be the same as or different from OAM of the core network element, which is not limited. When the OAM of the access network device is different from the OAM of the core network element, a transmission interface may exist between the different OAM. Optionally, the OAM may also be referred to as an element management system.

It may be understood that the access network device, the terminal, a network element in the core network, the OAM, and the like may be referred to as communication apparatuses. For example, the access network device may be understood as a communication apparatus having a base station function, the terminal may be understood as a communication apparatus having a terminal function, and the network element in the core network may be understood as an apparatus having a core network element function. For example, the AMF may be understood as a communication apparatus having an AMF function. The OAM may be understood as an apparatus having an OAM function.

The solutions provided in embodiments of this application may be applied to a cellular system related to the 3rd Generation Partnership Project (3rd generation partnership project, 3GPP), for example, a 4th generation (4th generation, 4G) mobile communication system, a 5G mobile communication system, or a future-oriented evolved system, for example, a 6G mobile communication system or an integrated sensing and communication system. Alternatively, the solutions in embodiments of this application may be applied to another scenario. This is not limited.

As shown in FIG. 2, a closed-loop control process includes monitoring, analysis, decision-making, and execution. For example, a managed entity is monitored to obtain a monitoring result. Once it is found that the monitored entity cannot satisfy a configured target, a corresponding reason may be analyzed, a corresponding solution may be decided, and the corresponding solution may be executed. The entire closed-loop control process is fully automated without participation of human operators or other management entities. For example, a target is configured for the monitored entity. The monitored entity is monitored. Once it is found that the monitored entity deviates from the target, a corresponding operation may be automatically performed on the monitored entity based on the foregoing series of processing processes such as monitoring, analysis, decision-making, and execution, so that the monitored entity always satisfies the configured target.

For example, the monitored entity may be a delay of a wireless communication network. The delay of the wireless communication network may be periodically monitored. Once it is found that the delay of the wireless communication network is greater than the configured target, the wireless communication network is analyzed to obtain an analysis result, a corresponding solution is decided, and a corresponding solution is executed. For example, it is found, through analysis of the wireless communication network, that congestion of the wireless communication network causes an increase in the delay. The corresponding solution may be to increase a bandwidth, adding a route, or the like. In this case, the bandwidth, the route, or the like of the wireless communication network may be increased, so that the delay of the wireless communication network satisfies the configured target.

An embodiment of this application provides a closed-loop control method, to implement closed-loop control in a wireless communication system. The method includes: When receiving an external request for creating a closed-loop work object, a closed control loop (closed control loop, CCL) management function may create the closed-loop work object. A process of creating the closed-loop work object includes: creating an analysis work object and creating an execution work object. Further, the method may further include: creating a monitoring work object.

It should be noted that in the following descriptions of the process, execution entities involved in the process include: an intent handler, a CCL management function, a management data analytics function (management data analytics function, MDAF), an execution function, and a monitoring function. In a possible implementation, the CCL management function and the MDAF may be deployed in the OAM for implementation, and the execution function and the monitoring function may be deployed in the OAM for implementation, or may be deployed in the network element of the core network for implementation. The intent handler may be located outside the wireless communication network, for example, may correspond to an application or a service. Optionally, the execution function may alternatively be a network element management function or a network management function, and the monitoring function may alternatively be a fault management (fault management, FM) function, a performance management (performance management, PM) function, or the like.

### Embodiment 1

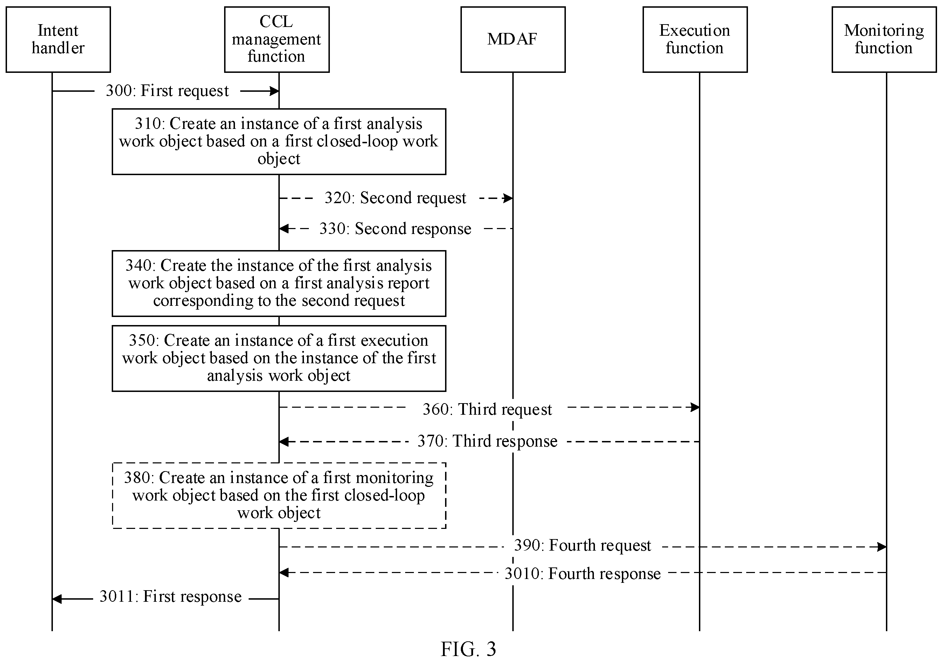

As shown in FIG. 3, an embodiment of this application provides a schematic flowchart, including the following steps.

Step 300: An intent handler sends a first request to a CCL management function, and the CCL management function receives the first request from the intent handler.

In a possible implementation, after receiving an intent request, the intent handler may create a first closed-loop work object based on the intent request. For example, the intent request received by the intent handler mainly indicates that a UPF network element is expected to be deployed in Haidian District, Beijing, and the UPF network element may satisfy a maximum of 25000 PDU sessions and support a maximum of 2500 registered users. The intent handler creates the first closed-loop work object based on the intent request. As shown in Table 1, the first closed-loop work object includes the following parameters.

**Table 1**

| | |
|---|---|
| Target | Maximum of PDU sessions: 25000 |
| | Maximum of registered users: 2500 |
| Object | UPF |
| Location | Haidian District, Beijing |

The intent handler sends the first request to the CCL management function, and the first request is used to request to create an instance of the first closed-loop work object. After receiving the first request, the CCL management function may automatically trigger creation of an instance of a first analysis work object, that is, perform step 310.

Step 310: The CCL management function creates the instance of the first analysis work object based on the first closed-loop work object, so that the first analysis work object can further trigger to initiate a second request to an MDAF, where the second request may be one or more requests.

In a possible implementation, the first request includes the first closed-loop work object. When receiving the first request, the CCL management function may obtain, from the first request, information included in the first closed-loop work object, and create the instance of the first analysis work object based on the first closed-loop work object. It may be understood that the first analysis work object created by the CCL management function based on the first closed-loop work object includes one or more analysis tasks. For one analysis task, the CCL management function sends a request (where the request may be referred to as the second request) to the MDAF, to request an analysis report corresponding to the analysis task. This process may be described as follows: One analysis task is associated with one request.

For example, the parameters included in the first closed-loop work object obtained by the CCL management function are shown in Table 1. The CCL management function may trigger, based on the first closed-loop work object shown in Table 1, creation of the instance of the first analysis work object, and determine that the instance of the first analysis work object includes one or more analysis tasks. For example, an analysis task is used to analyze a resource used for deploying the UPF, for example, a quantity of virtual machines required for deploying the UPF, a required virtual storage resource, and a required virtual network bandwidth.

Step 320: The CCL management function sends the second request to the MDAF, and the MDAF receives the second request from the CCL management function.

For example, the second request is used to request to create an instance of an MDARequest object. In a possible implementation, the CCL management function may determine the second request based on the first analysis work object. For example, a parameter in the second request is determined based on the parameter included in the first analysis work object. The second request is used to request the MDAF to analyze content included in the second request. When receiving the second request, the MDAF may determine a first analysis report based on the second request and/or select a suitable first model to determine a first analysis report. For example, the MDAF obtains the content included in the second request, selects the suitable first model based on the content included in the second request, generates an input parameter of the first model, and inputs the foregoing input parameter into the first model, to obtain an output parameter of the first model. The first analysis report is generated and determined based on the output parameter of the first model. Optionally, the first model may be an artificial intelligence (artificial intelligence, AI) model or a machine learning (machine learning, ML) model, referred to as a model for short. The model may represent a correspondence between an input and an output. In the descriptions of this embodiment of this application, that the MDAF generates the first analysis report based on the first model may be replaced with the following. The MDAF determines the first analysis report based on the first model and/or an MDA capability.

For example, the first analysis report includes a recommended operation. The recommended operation may be an operation recommended for the parameter requested by the second request. For example, the second request is used to request to analyze the resource used for deploying the UPF, and the first analysis report includes a recommended operation for deploying the UPF, for example, for UPF deployment, a virtualized network function (virtualized network function, VNF) request recommended to be initiated, and information about a virtual network function descriptor (virtual network function descriptor, VNFD) recommended to be used.

Step 330: The MDAF sends a second response to the CCL management function, and the CCL management function receives the second response from the MDAF.

In a possible implementation, the second response includes the first analysis report. Optionally, the first analysis report further includes indication information of the first model, for example, an identifier of the first model (for example, an identifier of an ML entity (entity)) or a domain name DN. Further, optionally, the first analysis report further includes indication information of network impact, for example, estimated time spent on deploying the UPF, whether deploying the UPF based on the recommendation in the first analysis report interrupts a service, or resource consumption for deploying the UPF. In the descriptions of this embodiment of this application, the indication information of the first model may be replaced with indication information of the first model and/or an MDA capability.

Step 320 and step 330 are optional, and may not be performed.

Step 340: The CCL management function creates the instance of the first analysis work object based on the first analysis report corresponding to the second request.

In a possible implementation, in addition to an initial parameter of the first analysis work object, the instance of the first analysis work object further includes some or all parameters in the first analysis report. Optionally, the instance of the first analysis work object further includes the indication information of the first model, and/or the indication information for the network impact, and the like. Optionally, creating the instance of the first analysis work object may also be described as: updating the first analysis work object.

Step 350: The CCL management function creates an instance of a first execution work object based on the instance of the first analysis work object.

In a possible implementation, the CCL management function may create the instance of the first execution work object based on the instance of the first analysis work object. For example, the instance of the first analysis work object includes the first analysis report, and the CCL management function may create the instance of the first execution work object based on the first analysis report. Alternatively, when creating the instance of the first execution work object, the CCL management function may consider an accuracy of an analysis report of the MDAF. For example, the CCL management function may obtain the accuracy of the analysis report of the MDAF. When the accuracy of the analysis report of the MDAF is greater than (or greater than or equal to) a threshold, the CCL management function creates the instance of the first execution work object based on the instance of the first analysis work object. Alternatively, when the accuracy of the analysis report of the MDAF is less than or equal to (or less than) a threshold, the CCL management function may create the instance of the first execution work object in another manner. For example, the instance of the first execution work object is created according to a locally configured policy. The first execution work object may include one or more execution tasks, and execution objects (or execution functions) corresponding to the one or more execution tasks may be the same or different, which is not limited. In a possible implementation, as shown in Table 2, the first execution work object includes the following parameters.

**Table 2**

| | |
|---|---|
| Execution object | The execution object is an object that executes an execution task in the first execution work object, and the execution object may also be referred to as an execution function. |
| Execution task | The execution task is determined based on the first analysis report of the MDAF, or is determined in another manner. |
| Identifier of the first analysis report | If the execution task is determined based on the first analysis report of the MDAF, the first execution work object may carry the identifier of the first analysis report. Alternatively, if the execution task is determined in another manner, the first execution work object may not include the identifier of the first analysis report. |

Step 360: The CCL management function sends a third request to the execution function, and the execution function receives the third request from the CCL management function.

For example, the third request includes one or more execution tasks, and the third request is used to request to create the instance of the first execution work object. When receiving the third request, the execution function may execute a corresponding operation based on the one or more execution tasks included in the third request, to generate the instance of the first execution work object. Optionally, in addition to the parameter of the first execution work object, the instance of the first execution work object further includes a first execution result. For example, if the execution function successfully executes the corresponding execution task, the first execution result may be "successful". Alternatively, if the execution function fails to execute the corresponding execution task, the first execution result may be "failed". For example, the foregoing example is still used. An execution task may deploy the UPF on a virtual network resource. In this case, the execution function may deploy the UPF on a corresponding virtual network resource based on the execution task, and feed back the corresponding first execution result to the CCL management function after the UPF is deployed.

Step 370: The execution function sends a third response to the CCL management function, and the CCL management function receives the third response from the execution function.

For example, the third response includes the first execution result.

Step 360 and step 370 are optional, and may not be performed.

Step 380: The CCL management function creates an instance of a first monitoring work object based on the first closed-loop work object.

In a possible implementation, when receiving the third response, the CCL management function may automatically trigger step 380 to create the instance of the first monitoring work object based on the first closed-loop work object. For example, the CCL management function creates the instance of the first monitoring work object based on the target in the first closed-loop work object. The first monitoring work object includes one or more monitoring tasks. For example, a monitoring task may be to monitor whether the deployed UPF can support 25000 PDU sessions during running, and another monitoring task may be to monitor whether the deployed UPF can support 2500 registered users during running.

Step 390: The CCL management function sends a fourth request to the monitoring function, and the monitoring function receives the fourth request from the CCL management function.

The fourth request includes one or more monitoring tasks, and the fourth request is used to request to create the instance of the first monitoring work object. In a possible implementation, when receiving the fourth request, the monitoring function may obtain one or more monitoring tasks from the fourth request. The monitoring function executes a corresponding monitoring operation based on one or more monitoring functions, to determine a first monitoring result. The first monitoring result may be that the target is satisfied or the target is not satisfied. For example, the monitoring function monitors whether the UPF may support 25000 PDU sessions during running, or monitors whether the UPF may support 2500 registered users during running. If the UPF may support the foregoing target during running, the first monitoring result is that the target is satisfied. If the UPF does not support the foregoing target during running, the first monitoring result is that the target is not satisfied.

Step 3010: The monitoring function sends a fourth response to the CCL management function, and the CCL management function receives the fourth response from the monitoring function.

The fourth response includes the first monitoring result.

Step 380 to step 3010 are optional, and may not be performed.

In a possible implementation, when receiving the fourth response, the CCL management function may update the first execution work object shown in Table 2. For example, in addition to the parameters shown in Table 2, as shown in Table 3, the first execution work object may further include the following parameters.

**Table 3**

| | |
|---|---|
| | |
| First monitoring result | The first monitoring result may be that the target is satisfied or the target is not satisfied. |
| Identifier of a monitoring task associated with the first monitoring result | Optionally, the identifier of the monitoring task may be a distinguished name (distinguished name, DN) of the monitoring task. |

Step 3011: The CCL management function replies with a first response to the intent handler, and the intent handler receives the first response from the CCL management function.

In a possible implementation, "replying the first response" may be replaced with "sending the first response". The CCL management function may update the first closed-loop work object to determine the instance of the first closed-loop work object, and the first response includes instance information of the first closed-loop work object. For example, the instance information of the first closed-loop work object includes an identifier of the instance of the first closed-loop work object, or a parameter included in the instance and a corresponding value. The instance of the first closed-loop work object may also be referred to as an updated first closed-loop work object. For example, the instance of the first closed-loop work object is associated with at least one of the following: the first analysis work object, the first analysis report corresponding to the first analysis work object, the instance of the first analysis work object, the first execution work object, the first execution result corresponding to the first execution work object, the instance of the first execution work object, the first monitoring work object, the first monitoring result corresponding to the first monitoring work object, or the instance of the first monitoring work object.

For example, as shown in Table 4, the instance of the first closed-loop work object includes the following parameters.

**Table 4**

| | |
|---|---|
| Target | Maximum of PDU sessions: 25000 |
| | Maximum of registered users: 2500 |
| Object | UPF |
| Location | Haidian District, Beijing |
| Analysis waiting time | Start timing upon sending |
| First analysis work object | For example, a DN of the first analysis work object. |
| Analysis information | For example, the analysis information includes at least one of the following: the first analysis report, the indication information of the first model, or the indication information for the network impact. |
| First monitoring work object | For example, a DN of the first monitoring work object. |
| First execution work object | For example, a DN of the first execution work object. |

In a possible implementation, when receiving the first response, the intent handler may obtain the instance of the first closed-loop work object from the first response. The intent handler may generate an intent fulfillment report (intent fulfillment report) in an intent report (intent report) based on the instance of the first closed-loop work object. For a specific process, refer to 3GPP TS 28.312.

Optionally, the intent handler may query, based on the DN of the first monitoring work object in the instance of the first closed-loop work object, for the parameter included in the first monitoring work object. Alternatively, the parameter included in the first analysis work object may be queried for based on the DN of the first analysis work object in the instance of the first closed-loop work object. Alternatively, the parameter included in the first execution work object is queried for based on the DN of the first execution work object in the instance of the first closed-loop work object, or the like.

Optionally, in step 330 in the foregoing process in FIG. 3, after the CCL management function receives the second response from the MDAF, the method further includes the following step.

The CCL management function sends the instance of the first closed-loop work object that is successfully created to the intent handler, and the intent handler receives the successfully created instance of the first closed-loop work object sent by the CCL management function.

For example, in addition to the parameters included in the first closed-loop work object shown in Table 1, the instance of the first closed-loop work object that is successfully created may further include the following parameters, as shown in Table 5.

**Table 5**

| | |
|---|---|
| Analysis waiting time | The analysis waiting time starts timing when the CCL management function sends the first closed-loop work object that is successfully created to the intent handler. |
| First analysis work object | For the first analysis work object associated with the first closed-loop work object that is successfully created, for example, the DN of the first analysis work object, reference may be specifically made to 3GPP TS 32.300. |
| Analysis information | For example, the analysis information includes the first analysis report, the indication information of the first model, or the indication information for the network impact. |

The intent handler generates an intent report (intent report) when receiving the instance of the first closed-loop work object that is successfully created. The intent report includes an intent feasibility check report (intent feasibility check report). For the intent feasibility check report, refer to 3GPP TS 28.312. The intent feasibility check report includes whether the recommended operation corresponding to the intent is feasible, and/or impact of the recommended operation on a network, and the like. If the intent handler agrees to the recommended operation corresponding to the intent, information is not replied to the CCL management function any more. If the intent handler does not agree to the recommended operation corresponding to the intent, a renegotiation request is sent to the CCL management function, for example, updating the first closed-loop work object or deleting the first closed-loop work object. In the analysis waiting time in Table 5, if the CCL management function does not receive the renegotiation request, step 340 and step 350 in FIG. 3 are triggered to create the instance of the first execution work object.

According to the foregoing descriptions, when obtaining a specific execution solution based on the intent of the intent handler, the CCL management function notifies the intent handler of information such as the execution solution and possible impact on the network. The intent handler may determine whether to agree to the specific execution solution and/or the impact on the network. If yes, the CCL management function creates the first execution work object and executes the corresponding solution. In a process of executing the solution, a recommendation and a requirement of the intent handler are fully considered, so that the execution solution corresponding to the intent can satisfy the requirement of the intent handler.

### Embodiment 2

As described in step 350, when the accuracy of the analysis report of the MDAF is greater than the threshold, the CCL management function creates the instance of the first execution work object based on the instance of the first analysis work object. Alternatively, when the accuracy of the analysis report of the MDAF is less than the threshold, the CCL management function creates the instance of the first execution work object in another manner.

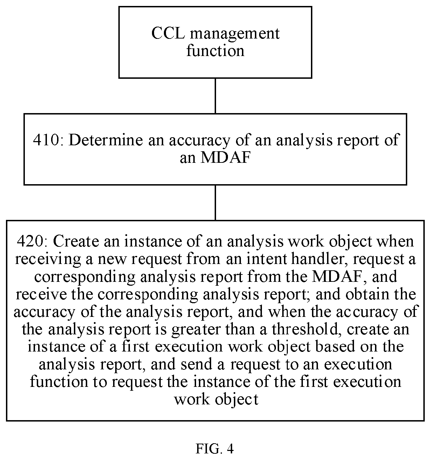

As shown in FIG. 4, an embodiment of this application provides a schematic flowchart, including at least the following steps.

Step 410: A CCL management function determines an accuracy of an analysis report of an MDAF.

For example, the CCL management function creates an instance of the execution work object based on the analysis report of the MDAF. An execution function executes a corresponding operation based on the execution task of the execution work object, and then the monitoring function monitors the foregoing operation to obtain a monitoring result. The CCL management function may compare the monitoring result with a preset target, to determine the accuracy of the analysis report of the MDAF. For example, the CCL management function obtains four monitoring results, where three monitoring results satisfy the preset target, and one monitoring result does not satisfy the preset target. In this case, the accuracy of the analysis report of the MDAF is 75%.

In a possible implementation, the CCL management function may measure the accuracy of the analysis report of the MDAF in one or more dimensions. For example, the CCL management function may measure the accuracy of the analysis report of the MDAF in a dimension, for example, an MDA capability or a model. When measuring the accuracy of the analysis report of the MDAF, the MDAF may consider the following information shown in Table 6.

**Table 6**

| | | |
|---|---|---|
| | MDAF identifier | For example, the identifier may be a DN of the MDAF, and is used to uniquely identify an MDAF entity. |
| | MDA capability (capability) | For the MDA capability used by the MDAF in current analysis, reference may be specifically made to the MDA capability defined in 3GPP TS 28.104. |
| | Model identifier | Used to identify a model used by the MDAF in current analysis. |
| | Recommended operation | Recommended actions (recommended actions) carried in the analysis report of the MDAF. For the recommended operation, refer to 3GPP TS 28.104. |
| | Whether to adopt | Whether the recommended operation in the analysis report of the MDAF is adopted when an execution work object is determined. |
| | Execution result | For example, whether the execution result satisfies a target. |

Step 420: The CCL management function creates an instance of an analysis work object when receiving a new request (for example, the request may be the first request in the process in FIG. 3) from an intent handler, requests a corresponding analysis report from the MDAF, and receives the corresponding analysis report. The CCL management function obtains an accuracy of the analysis report, creates an instance of a first execution work object based on the analysis report when the accuracy of the analysis report is greater than a threshold, and sends a request to the execution function to request the instance of the first execution work object.

It may be understood that when determining the accuracy of the analysis report, the CCL management function may obtain an MDA capability corresponding to the analysis report, that is, an MDA capability based on which the analysis report is determined, and/or may obtain a model corresponding to the analysis report, that is, a model based on which the analysis report is determined. The CCL management function may determine the accuracy of the analysis report based on the MDA capability and/or the model identifier.

In a possible implementation, the CCL management function may locally configure an execution policy. As shown in Table 7, the locally configured execution policy includes the following parameters.

**Table 7**

| | | | |
|---|---|---|---|
| Condition (condition) | | | Threshold of the accuracy (for example, greater than 95%) |
| | Scope (scope) | | Based on an MDA capability and/or a model |
| | Operation action | | Use or do not use the recommended operation in the analysis report |

For example, when receiving an analysis report, the CCL management function may obtain an MDA capability and/or a model identifier corresponding to the analysis report. The CCL management function matches an execution policy based on the MDA capability and/or the model identifier. whether the accuracy of the analysis report is greater than the threshold of the accuracy configured in Table 7 is determined. If yes, an execution work object is created based on the recommended operation in the analysis report. Alternatively, the execution work object or the like is created by using another method.

In Embodiment 2, as in Embodiment 1 above, after creating the execution work object, the CCL management function may request the execution function to execute the corresponding execution task, and may request the monitoring function to execute the corresponding monitoring task. Alternatively, referring to descriptions in Embodiment 3 below, when determining that the accuracy of the analysis report of the MDAF is greater than the threshold, the CCL management function may authorize subsequent execution and monitoring permission and the like to the MDAF.

### [Embodiment 3]

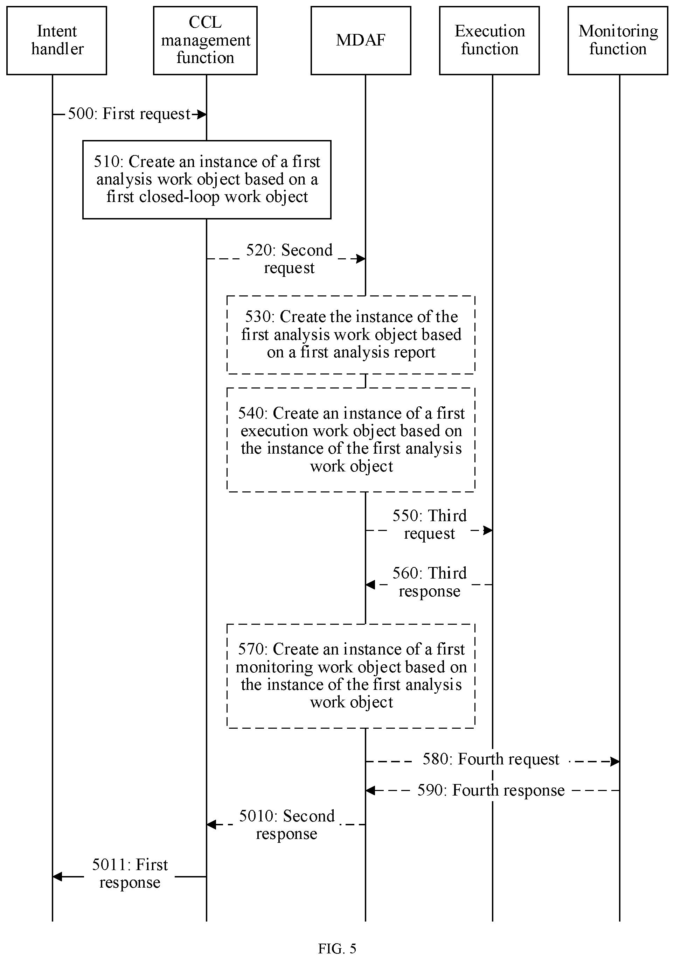

As shown in FIG. 5, an embodiment of this application provides a schematic flowchart, including the following steps.

Step 500: An intent handler sends a first request to a CCL management function, and the CCL management function receives the first request from the intent handler.

Step 510: The CCL management function creates an instance of a first analysis work object based on a first closed-loop work object, and the first analysis work object is used to trigger to initiate a second request to an MDAF.

For specific descriptions of step 500 and step 510, refer to step 300 and step 310 in the process in FIG. 3.

Step 520: The CCL management function sends the second request to the MDAF, and the MDAF receives the second request from the CCL management function.

For example, the second request is used to request the MDAF to analyze a parameter included in the second request. The CCL management function may obtain an accuracy of an analysis report of the MDAF. When the accuracy of the analysis report of the MDAF is greater than a threshold, execution may be authorized to the MDAF. For example, the second request may carry a first indication, and the first indication indicates the MDAF to create a first execution work object.

For example, a parameter may be newly added to the second request, and a name of the parameter may be an execution authorization (execution allowed). If the parameter is a first value, it indicates that the CCL management function authorizes an execution function to the MDAF. If the parameter is a second value or the second request does not carry the parameter, it indicates that the CCL management function does not authorize an execution function to the MDAF.

In a possible implementation, the CCL management function may determine, based on a locally configured policy, whether to authorize the execution to the MDAF. For example, as shown in Table 8, the locally configured policy of the CCL includes the following parameters.

**Table 8**

| | | | |
|---|---|---|---|
| Condition condition | | | Threshold of the accuracy (for example, greater than 99%) |
| | Scope scope | | Based on an MDA capability and/or a model |
| | Operation action | | Can be authorized to the MDAF |

For an MDA capability and/or a model, when the accuracy of the analysis report of the MDAF is greater than the threshold configured in Table 8, the CCL may authorize the execution to the MDAF. Otherwise, the CCL executes a process of creating the first execution work object. For details, refer to the descriptions in FIG. 3 in Embodiment 1.

When the MDAF receives the second request, when the MDAF obtains a first indication from the second request, the MDAF may trigger step 530 and step 540 to create an instance of the first execution work object.

Step 530: The MDAF creates an instance of the first analysis work object based on the first analysis report.

Step 540: The MDAF creates the instance of the first execution work object based on the instance of the first analysis work object.

The first execution work object includes one or more execution tasks.

Step 550: The MDAF sends a third request to the execution function, and the execution function receives the third request from the MDAF.

The third request includes one or more execution tasks, and the third request is used to request to create the instance of the first execution work object.

Step 560: The execution function sends a third response to the MDAF, and the MDAF receives the third response from the execution function.

The third response includes a first execution result.

Optionally, the first indication in the second request further indicates the MDAF to create an instance of a first monitoring work object. Optionally, the process in FIG. 5 may further include step 570 and step 580.

Step 570: The MDAF creates an instance of the first monitoring work object based on the instance of the first analysis work object.

The first monitoring work object includes one or more monitoring tasks.

Step 580: The MDAF sends a fourth request to the monitoring function, and the monitoring function receives the fourth request from the MDAF.

The fourth request includes one or more monitoring tasks, and the fourth request is used to request to create the instance of the first monitoring work object.

Step 590: The monitoring function sends a fourth response to the MDAF, and the MDAF receives the fourth response from the monitoring function.

The fourth response includes the first monitoring result.

Step 5010: The MDAF sends a second response to the CCL management function, and the CCL management function receives the second response from the MDAF.

For example, the second response includes the first analysis report corresponding to the second request. Further, the second response further includes at least one of the following: a first execution result corresponding to the first execution work object, a first monitoring result corresponding to the first monitoring work object, indication information of the first model corresponding to the first analysis report, indication information of network impact, the first execution work object, the first execution result, the first monitoring work object, the first monitoring result, or the like.

Step 5011: The CCL management function sends a first response to the intent handler, and the intent handler receives the first response from the CCL management function.

For a specific implementation process of step 5011, refer to the descriptions of step 3011 in FIG. 3 in Embodiment 1.

### Embodiment 4

In this embodiment of this application, the CCL management function may feed back the execution result to the MDAF, and the MDAF may retrain a model corresponding to the execution result based on the execution result, to improve an accuracy of generating an analysis report by using the model in the MDAF.

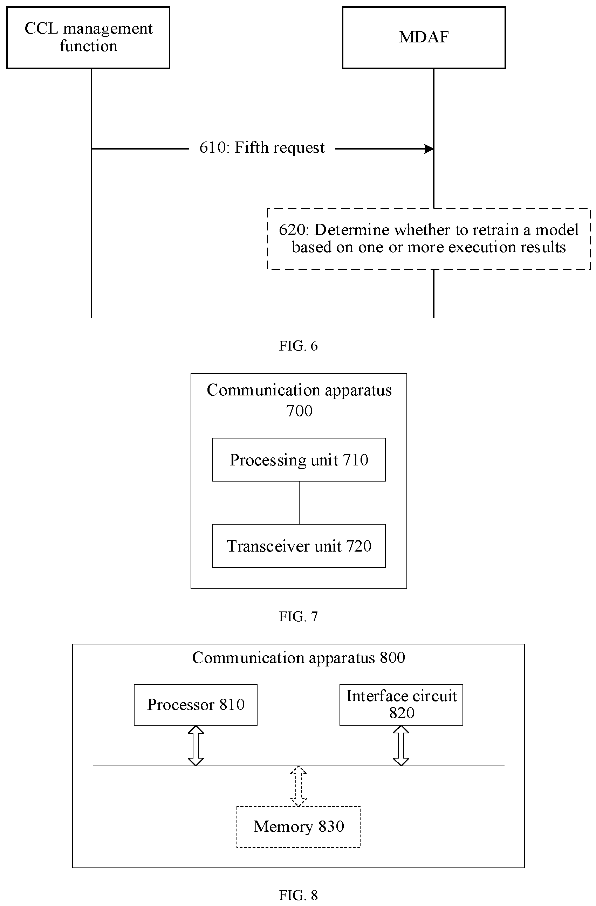

As shown in FIG. 6, an embodiment of this application provides a schematic flowchart, including the following steps.

Step 610: The CCL management function sends a fifth request to the MDAF, and the MDAF receives the fifth request from the CCL management function.

In a possible implementation, the fifth request is used to request to create an instance of a first execution result object, the first execution result object includes one or more execution results, and the fifth request includes the one or more execution results.

Optionally, step 620: The MDAF may determine whether to retrain the model based on the one or more execution results.

According to the foregoing design, the MDAF may determine whether to retrain the model based on one or more execution results fed back by the CCL management function, thereby improving the accuracy of the model.

It may be understood that the solution in Embodiment 4 may be implemented separately, or may be implemented together with the foregoing solution in Embodiment 1, Embodiment 2, or Embodiment 3.

It may be understood that, in this embodiment of this application:
1. The focus is on describing differences between different processes, and mutual reference may be made to descriptions of the different processes.
2. In each process, a sequence of different steps is not limited. In addition, each process may include fewer steps or more steps than those in the schematic flowcharts or text descriptions.
3. In this embodiment of this application, "(for example, the CCL management function) receives information from (for example, the intent handler)" may be understood as that a source end of the information is the CCL management function, and a destination end of the information is the intent handler, which may include that the terminal may directly or indirectly receive the information from the CCL management function. Necessary processing, such as format change, may be performed on information between the source terminal and the destination terminal for sending the information, but the destination terminal may be understood as effective information from the source terminal. Similar descriptions in this application may be understood similarly, and details are not described herein again.

In the foregoing embodiments provided in this application, the method provided in embodiments of this application is separately described from perspectives of interaction among the intent handler, the CCL management function, the execution function, and the monitoring function. To implement functions in the methods provided in embodiments of this application, the intent handler, the CCL management function, the execution function, and the monitoring function may include a hardware structure and/or a software module, and implement the foregoing functions in a form of the hardware structure, a software module, or a combination of the hardware structure and the software module. Whether a function in the foregoing functions is performed by using the hardware structure, the software module, or the combination of the hardware structure and the software module depends on design constraints of particular applications of the technical solutions.

FIG. 7 and FIG. 8 are diagrams of a possible structure of an apparatus according to an embodiment of this application. These communication apparatuses may implement one or more corresponding functions in the foregoing method embodiments, for example, a function implemented by an CCL management function or an MDAF. Therefore, beneficial effects of the foregoing method embodiments may be implemented.

As shown in FIG. 7, the communication apparatus 700 includes a processing unit 710 and a transceiver unit 720. Optionally, the unit may also be referred to as a module. For example, the processing unit may also be referred to as a processing module, and the transceiver unit may also be referred to as a transceiver module.

For example, the processing unit may also be referred to as a processor, a processing board, a processing module, or a processing apparatus. The communication unit may also be referred to as a transceiver, a transceiver machine, a transceiver module, a transceiver apparatus, or the like. Further, the communication unit may include at least one of a sending unit or a receiving unit. The sending unit and the receiving unit may be integrated together, or may be two independent units, or the like.

In a design, the communication apparatus 700 is configured to implement functions of the CCL management function in FIG. 3. Specifically, the transceiver unit 720 is configured to receive a first request, where the first request includes a first closed-loop work object, and the first request is used to request to create an instance of the first closed-loop work object. The processing unit 710 is configured to create an instance of a first analysis work object based on the first closed-loop work object, where the first analysis work object is used to initiate a second request to a management data analytics function MDAF; update the instance of the first analysis work object based on a first analysis report corresponding to the second request; and create an instance of a first execution work object based on the instance of the first analysis work object. The transceiver unit 720 is further configured to reply with a first response, where the first response includes instance information of the first closed-loop work object.

In another design, the communication apparatus 700 is configured to implement functions of the CCL management function in FIG. 6. Specifically, the transceiver unit 720 is configured to receive a first request, where the first request includes a first closed-loop work object, and the first request is used to request to create an instance of the first closed-loop work object. The processing unit 710 is configured to create an instance of a first analysis work object based on the first closed-loop work object, where the first analysis work object is used to initiate a second request to a management data analytics function MDAF. The transceiver unit 720 is further configured to send the second request to the MDAF when an accuracy of an analysis report of the MDAF is greater than a threshold, where the second request is used to request the MDAF to analyze content included in the second request, the second request includes a first indication, and the first indication indicates the MDAF to create an instance of a first execution work object. The transceiver unit 720 is further configured to receive a second response from the MDAF, where the second response includes a first analysis report corresponding to the second request and a first execution result corresponding to the first execution work object.

In another design, the communication apparatus 700 is configured to implement functions of the MDAF in FIG. 3 or FIG. 6. Specifically, the transceiver unit 720 is configured to receive a second request from a closed control loop CCL management function, where the second request is used to request to analyze content included in the second request. The processing unit 710 is configured to determine a first analysis report based on the second request and a first model. The transceiver unit 720 is further configured to send a second response to the CCL management function, where the second response includes the first analysis report, and the first analysis report includes indication information of the first model.

For more detailed descriptions of the processing unit 710 and the transceiver unit 720, refer to the descriptions of FIG. 3 to FIG. 6 in the foregoing method embodiments. Details are not described herein.

It may be understood that, in embodiments of this application, division into the units is an example, and is merely logical function division. In practical implementation, another division manner may be used. In addition, functional units in embodiments of this application may be integrated into one physical device (for example, a processor), or each functional unit may be an independent physical device, or two or more units may be integrated into one unit for implementation. The integrated unit may be implemented in a form of hardware, or implemented in a form of a software functional module, or the like.

FIG. 8 is a diagram of another structure of a communication apparatus 800 according to an embodiment of this application. For example, the communication apparatus 800 shown in FIG. 8 may be an implementation of a hardware circuit of the communication apparatus 700 shown in FIG. 7. For ease of description, FIG. 8 shows only a main part of the communication apparatus.

As shown in FIG. 8, the communication apparatus 800 includes a processor 810 and an interface circuit 820. The processor 810 and the interface circuit 820 are coupled to each other.

For example, the processor 810 may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor, or the like. The interface circuit 820 may be a transceiver, an input/output circuit, or the like.

Optionally, the communication apparatus 800 may further include a memory 830 configured to store instructions executed by the processor 810, or store input data required for the processor 810 to run the instructions, or store data generated after the processor 810 runs the instructions. For example, the instructions may also be referred to as a computer program or computer program code.

For example, the memory 830 may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art.

When the communication apparatus 800 is configured to implement the method shown in FIG. 3 to FIG. 6, the processor 810 is configured to implement the function of the foregoing processing unit 710, and the interface circuit 820 is configured to implement the function of the foregoing transceiver unit 720.

In an implementation, the interface circuit 820 is configured to receive a signal from another communication apparatus other than the communication apparatus 800 and transmit the signal to the processor 810, or send a signal from the processor 810 to another communication apparatus other than the communication apparatus. The processor 810 is configured to implement the foregoing functions in FIG. 3 to FIG. 6 by using a logic circuit or by executing code instructions.

An embodiment of this application further provides a communication apparatus. The communication apparatus includes a processor and a memory. The processor is coupled to the memory, and the processor is configured to implement functions in FIG. 3 to FIG. 6. For example, the processor may execute instructions in the memory, so that the communication apparatus implements one or more functions in the foregoing method embodiments, for example, the functions implemented in FIG. 3 or FIG. 6. An example storage medium is coupled to a processor, so that the processor can read information from the storage medium and write information into the storage medium. Certainly, the storage medium may be a component of the processor. The processor and the storage medium may be located in the ASIC.

An embodiment of this application further provides a computer-readable storage medium. The computer-readable storage medium stores instructions, and the instructions may also be referred to as a computer program, computer program code, or the like. The instructions run on a computer, so that the computer performs functions in FIG. 3 to FIG. 6 in the foregoing method embodiments.

Optionally, the computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device such as a server or a data center that integrates one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application further provides a computer program product, including a computer program or instructions. The computer program or the instructions, when run on a computer, cause the foregoing methods in FIG. 3 to FIG. 6 to be performed. For example, the computer program product includes one or more computer programs or instructions. When the computer program or the instructions are loaded and executed on a computer, the processes or the functions in FIG. 3 to FIG. 6 in embodiments of this application are all or partially executed.

It may be understood that all or some of the methods in embodiments of this application may be implemented by software, hardware, firmware, or any combination thereof. When software is used to implement embodiments, all or some of embodiments may be implemented in a form of a computer program product.

An embodiment of this application further provides a chip. The chip includes a processor, the processor is coupled to a memory, and the processor is configured to execute a computer program or instructions stored in the memory, so that the chip implements functions in FIG. 3 to FIG. 6.

An embodiment of this application further provides a communication system, including a first communication apparatus and a second communication apparatus. The first communication apparatus is configured to implement functions of the CCL management function in FIG. 3 to FIG. 6, and the second communication apparatus is configured to implement functions of the MDAF. Optionally, the communication system further includes a third communication apparatus, configured to implement functions of the execution function. Optionally, the communication system further includes a fourth communication apparatus, configured to implement functions of the monitoring function.

Apparently, a person skilled in the art may make various modifications and variations to this application without departing from the scope of this application. In this way, if the modifications and variations made to this application fall within the scope of the claims of this application and their equivalent technologies, this application is also intended to include these modifications and variations.

## Claims

1. A closed-loop control method, wherein the method is applied to a closed control loop CCL management function, and comprises:
receiving a first request, wherein the first request comprises a first closed-loop work object, and the first request is used to request to create an instance of the first closed-loop work object;
creating an instance of a first analysis work object based on the first closed-loop work object, wherein the first analysis work object is used to initiate a second request to a management data analytics function MDAF;
updating the instance of the first analysis work object based on a first analysis report corresponding to the second request;
creating an instance of a first execution work object based on the instance of the first analysis work object; and
replying with a first response, wherein the first response comprises instance information of the first closed-loop work object.

2. The method according to claim 1, further comprising:
sending the second request to the MDAF, wherein the second request is used to request the MDAF to analyze content comprised in the second request; and
receiving a second response from the MDAF, wherein the second response comprises the first analysis report, and the first analysis report comprises indication information of a corresponding first model.

3. The method according to claim 2, wherein the first analysis report further comprises indication information of network impact.

4. The method according to any one of claims 1 to 3, wherein the first execution work object comprises one or more execution tasks, and the method further comprises:
sending a third request to an execution function, wherein the third request comprises the one or more execution tasks, and the third request is used to request to create the instance of the first execution work object; and
receiving a third response from the execution function, wherein the third response comprises a first execution result.

5. The method according to any one of claims 1 to 4, further comprising:
creating an instance of a first monitoring work object based on the first closed-loop work object.

6. The method according to claim 5, wherein the first monitoring work object comprises one or more monitoring tasks, and the method further comprises:
sending a fourth request to a monitoring function, wherein the fourth request comprises the one or more monitoring tasks, and the fourth request is used to request to create the instance of the first monitoring work object; and
receiving a fourth response from the monitoring function, wherein the fourth response comprises a first monitoring result.

7. The method according to any one of claims 1 to 6, wherein the creating the instance of the first execution work object based on the instance of the first analysis work object comprises:
obtaining an accuracy of an analysis report of the MDAF; and
creating the instance of the first execution work object based on the instance of the first analysis work object when the accuracy of the analysis report of the MDAF is greater than a threshold.

8. The method according to any one of claims 1 to 7, further comprising:
sending a fifth request to the MDAF, wherein the fifth request is used to request to create an instance of a first execution result object, the first execution result object comprises one or more execution results, and the fifth request comprises the one or more execution results.

9. The method according to any one of claims 1 to 8, wherein the instance of the first closed-loop work object is associated with at least one of the following: the first analysis work object, the first analysis report corresponding to the first analysis work object, the instance of the first analysis work object, the first execution work object, the first execution result corresponding to the first execution work object, the instance of the first execution work object, the first monitoring work object, the first monitoring result corresponding to the first monitoring work object, or the instance of the first monitoring work object.

10. The method according to any one of claims 1 to 9, wherein the receiving the first request comprises: receiving a first request from an intent handler; and the replying with the first response comprises: replying with the first response to the intent handler.

11. A closed-loop management method, wherein the method is applied to a closed control loop CCL management function, and comprises:
receiving a first request, wherein the first request comprises a first closed-loop work object, and the first request is used to request to create an instance of the first closed-loop work object;
creating an instance of a first analysis work object based on the first closed-loop work object, wherein the first analysis work object is used to initiate a second request to a management data analytics function MDAF;
sending the second request to the MDAF when an accuracy of an analysis report of the MDAF is greater than a threshold, wherein the second request is used to request the MDAF to analyze content comprised in the second request, the second request comprises a first indication, and the first indication indicates the MDAF to create an instance of a first execution work object; and
receiving a second response from the MDAF, wherein the second response comprises a first analysis report corresponding to the second request and a first execution result corresponding to the first execution work object.

12. The method according to claim 11, wherein the first indication further indicates the MDAF to create an instance of a first monitoring work object.

13. The method according to claim 12, wherein the second response further comprises a first monitoring result corresponding to the first monitoring work object.

14. The method according to any one of claims 11 to 13, wherein the first analysis report comprises indication information of a corresponding first model.

15. The method according to any one of claims 11 to 14, wherein the first analysis report further comprises indication information of network impact.

16. The method according to any one of claims 11 to 15, wherein the second response further comprises the first execution work object and/or the first monitoring work object.

17. A closed-loop control method, wherein the method is applied to a management data analytics function MDAF, and comprises:
receiving a second request from a closed control loop CCL management function, wherein the second request is used to request to analyze content comprised in the second request;
determining a first analysis report based on the second request and a first model; and
sending a second response to the CCL management function, wherein the second response comprises the first analysis report, and the first analysis report comprises indication information of the first model.

18. The method according to claim 17, wherein the first analysis report further comprises indication information of network impact.

19. The method according to claim 17 or 18, wherein the second request comprises a first indication, and the first indication indicates the MDAF to create an instance of a first execution work object.

20. The method according to claim 19, further comprising:
creating an instance of a first analysis work object based on the first analysis report; and
creating the instance of the first execution work object based on the instance of the first analysis work object.

21. The method according to claim 20, wherein the first execution work object comprises one or more execution tasks, and the method further comprises:
sending a third request to an execution function, wherein the third request comprises the one or more execution tasks, and the third request is used to request to create the instance of the first execution work object; and
receiving a third response from the execution function, wherein the third response comprises a first execution result.

22. The method according to any one of claims 19 to 21, wherein the first indication further indicates the MDAF to create an instance of a first monitoring work object.

23. The method according to claim 22, further comprising:
creating the instance of the first monitoring work object based on the instance of the first analysis work object.

24. The method according to claim 23, wherein the first monitoring work object comprises one or more monitoring tasks, and the method further comprises:
sending a fourth request to a monitoring function, wherein the fourth request comprises the one or more monitoring tasks, and the fourth request is used to request to create the instance of the first monitoring work object; and
receiving a fourth response from the monitoring function, wherein the fourth response comprises a first monitoring result.

25. The method according to any one of claims 19 to 24, wherein the second response further comprises at least one of the following: the first execution work object, the first execution result, the first monitoring work object, or the first monitoring result.

26. The method according to any one of claims 17 to 25, further comprising:
receiving a fifth request from the CCL management function, wherein the fifth request is used to request to create an instance of a first execution result object, the first execution result object comprises one or more execution results, and the fifth request comprises the one or more execution results; and
determining, based on the one or more execution results, whether to retrain the first model.

27. An apparatus, comprising a unit configured to perform the method according to any one of claims 1 to 10.

28. An apparatus, comprising a processor and a memory, wherein the processor is configured to execute a computer program or instructions stored in the memory, so that the communication apparatus implements the method according to any one of claims 1 to 10.

29. An apparatus, comprising a unit configured to perform the method according to any one of claims 11 to 16.

30. An apparatus, comprising a processor and a memory, wherein the processor is configured to execute a computer program or instructions stored in the memory, so that the communication apparatus implements the method according to any one of claims 11 to 16.

31. An apparatus, comprising a unit configured to perform the method according to any one of claims 17 to 26.

32. An apparatus, comprising a processor and a memory, wherein the processor is configured to execute a computer program or instructions stored in the memory, so that the communication apparatus implements the method according to any one of claims 17 to 26.

33. A chip, comprising a processor, wherein the processor is coupled to a memory, and is configured to execute a computer program or instructions stored in the memory, so that the chip implements the method according to any one of claims 1 to 10, or the method according to any one of claims 11 to 16, or the method according to any one of claims 17 to 26.

34. A computer-readable storage medium, storing a computer program or instructions, wherein the computer program or the instructions, when run on a computer, cause the computer to implement the method according to any one of claims 1 to 10, or the method according to any one of claims 11 to 16, or the method according to any one of claims 17 to 26.
